(19) Europäisches Patentamt
European Patent Office
Office européen des brevets

(11) Publication number: **0 165 649 B1**

# (12) EUROPEAN PATENT SPECIFICATION

(45) Date of publication of patent specification: 18.04.90

(51) Int. Cl.$^5$: **C 08 G 65/00**, C 08 G 65/32

(21) Application number: 85300784.7

(22) Date of filing: 06.02.85

## (54) Fluoropolyether compounds.

(30) Priority: 19.06.84 IT 2148084

(43) Date of publication of application: 27.12.85 Bulletin 85/52

(45) Publication of the grant of the patent: 18.04.90 Bulletin 90/16

(84) Designated Contracting States: BE DE FR GB NL SE

(56) References cited:
US-A-4 267 238
US-A-4 268 556

(73) Proprietor: Montedison S.p.A.
31, Foro Buonaparte
I-20121 Milan (IT)

(72) Inventor: Caporiccio, Gerardo
13, Via E. Filiberto
I-20149 Milan (IT)
Inventor: Strepparola, Ezio
6, viale Partigiano
I-24047 Treviglio Bergamo (IT)
Inventor: Scarati, Mario Alberto
20, via Bronzino
I-20133 Milan (IT)

(74) Representative: Whalley, Kevin et al
MARKS & CLERK 57/60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 165 649 B1

**Description**

This invention relates to fluoropolyether compounds, and in particular to a new class of compounds having the structure to perfluoropolyether, suitable to be used as lubricants or, in general, as protective agents of surfaces in different applications. The invention more particularly relates to fluoropolyethers containing end groups having an anchoring capacity.

It is known to use perfluoropolyethers as lubricants, for example in the field of video and audio tapes, as well as in precision mechanical instruments subjected to mechanical wear, and in the eletrical field, for the protection of contacts subjected to a high number of opening-closing cycles.

Perfluoropolyethers used for such purposes are known commercially under the trade name "Fomblin"® (of Montedison) and Krytox® (of DuPont), and are described for example in US—A—3,242,218, 3,665,041 and 3,715,378.

Improvements in the lubricating properties of the perfluoropolyethers were achieved, according to what is described in US—A—4,268,556 and 4,267,238, by introducing, into the perfluoropolyether chain, end groups of a polar and reactive nature, of the type $—CH_2OH$, —COOR, —CONH—R, and $—CO—CF_3$, which should ensure a better adhesion of the perfluoropolyether compound to the surface to be lubricated.

However, such modification involves the drawback of a high reactivity of the intermediate groups, some of which, for example, easily hydrolyse with formation of acid groups which react with the materials, especially with metallic materials, of the surface onto which they are applied, thus altering them.

We have found a new class of compounds having the structure of perfluoropolyethers, which exhibit better lubricating properties as well as better protective properties than the perfluoropolyethers used so far, and which at the same time are free from the drawbacks described hereinbefore. As a general structure, such compounds consist of a perfluoropolyether chain, characterized by the presence of certain organic end groups.

Such compounds are represented by one of the following general formulas (I) and (II):

(I) $R—O—(C_3F_6O)_m—(CFXO)_n—CFX—L$, in which the groups $(C_3F_6O)$ and (CFXO) are randomly distributed in the chain, and where:

R is of the groups: $—CF_3$, $—C_2F_5$, $—C_3F_7$;

X is F or $—CF_3$;

m = an integer from 3 to 100;

n = a finite integer, or zero, wherein m + n is from 3 to 100, and preferably from 5 to 50, provided that, when n is a finite integer, the ratio m/n is from 5 to 20 and R is preferably group $—CF_3$, while when n is zero, R is preferably one of the groups $—C_2F_5$ or $—C_3F_7$.

(II) $R''CFXO—(C_3F_6O)_x—(CFXO)_y—(C_2F_4O)_z—CFX—L$, in which the groups $(C_3F_6O)$, (CFXO) and $(C_2F_4O)$ are distributed randomly in the chain, and where:

X is F or $—CF_3$;

R" is F, $—CF_3$, or $—C_2F_5$, provided that group R"CFX contains not more than 3 carbon atoms, or L when x is zero;

x = a finite integer, or zero;

y, z = finite integers, such that x + y + z is from 5 to 200, preferably from 5 to 100, provided that, when x is a finite integer, the ratio (x + z)/y is from 5 to 0.5, preferably from 2 to 0.6, while when x is zero, the ratio z/y is from 1 to 0.5 while the sum y + z is from 5 to 200, and X is preferably F.

In general formulas (I) and (II), groups L are organic, non-polymerizable groups, having formula:

(III) Y—Z, wherein

Y = $—CH_2O—$, $—CH_2—O—CH_2$, $—CF_2—$, or $—CF_2O$; and has one of the general formulas defined hereinafter, and is an organic non-aromatic, non-fluorinated radical, free from activated hydrogen atoms, or is an aromatic radical, either or not containing heteroatoms, where such radical Z may give rise to coordinative bonds or to charge-transfer bonds, thus causing adsorption phenomena, for example chemiadsorption, electrostatic adsorption, adsorption due to π bond (delocalized electron adsorption), on various kinds of metal, polymeric or ceramic surfaces, in particular surfaces consisting of, or containing:

a) a metal or ion selected from Al, Fe, Ni, Co, Cr, Cu, Ag, Au, and Pt, or from alloys or crystalline aggregates thereof as are obtained from metallurgical or melting processes, or from deposition processes, such as chemical vapour deposition (CVD), under vacuum evaporation, sputtering, electrochemical evaporation, or from sintering processes;

b) suspensions of oxides such as $Fe_2O_3$, $CrO_2$, $Ba(FeO_2)_2$ in polymeric materials;

c) cermaic materials such as $Fe_2O_3$, $BaTiO_3$, $CaTiO_3$;

d) polymeric materials.

Radicals Z contain, as electron doublet donor atoms, oxygen, nitrogen, sulphur, selenium, phosphorus. Radicals Z belong to one of the following classes:

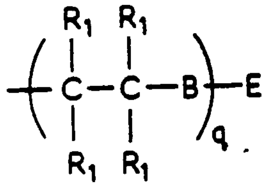

(1)

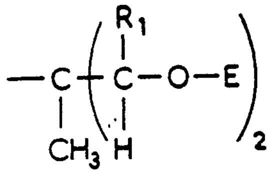

(2)

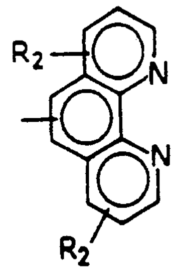

(3)

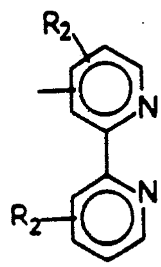

(4)

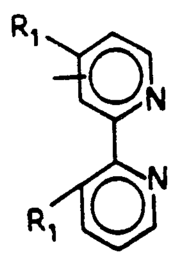

(5)

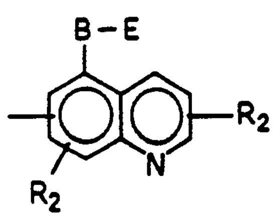

(6)

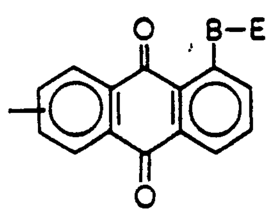

(7)

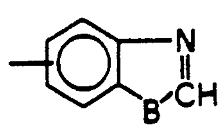

(8)

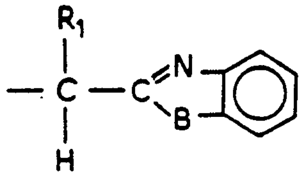

(9)

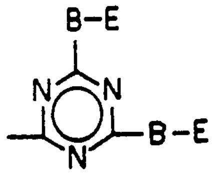

(10)

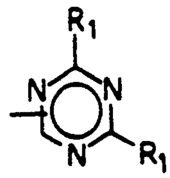

(11)

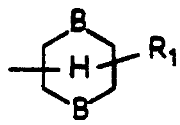

(12)

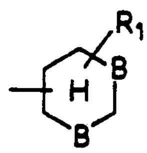

(13)

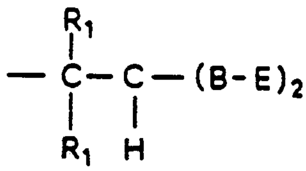

(14)

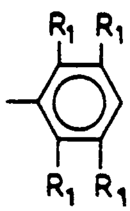

(15)

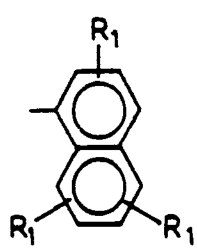

(16)

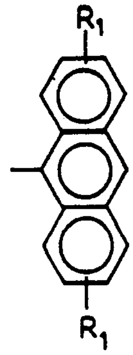

(17)

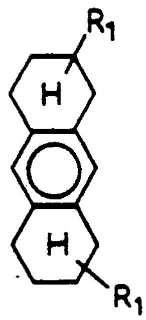

(18)

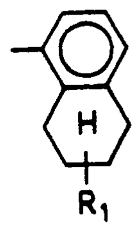

(19)

in which:

B = an atom of oxygen or of sulphur,
E = an alkyl containing from 1 to 3 carbon atoms.
$R_1$ = H or an alkyl containing 1 to 3 carbon atoms,
$R_2$ = Cl, Br, H or an alkoxy group of formula E—O—,
q = an integer from 1 to 3.

The compounds of formula (I) and (II), in which Z corresponds to formulas (1), (3), (8), (9), (12), (15), and (18) indicated hereinbefore, are the preferred ones.

The compounds of formulas (I) and (II), due to group L present therein, have the property of anchoring onto the surface of the metals or of the products indicated in groups (a), (b), (c) and (d) mentioned below. Such surfaces may be pure surfaces and directly exposed to the contact of foreign or external agents and bodies, or they may be coated by thin and discrete layers of protective materials, such as resins, amorphous carbon, graphite, etc.

Particular examples of surfaces (a) are surfaces of steels, bronzes, brasses, also sintered, surfaces of Sn—Ag, Sn—Au, Sn—Sb alloys, surfaces of alloys such as Co—Cr, Co—Ni, Fe—Co—Ni, Co—Ni—P, deposited by sputtering or electrochemically, or surfaces consisting of metal powders finely dispersed in a polymeric matrix.

Examples of surfaces (b) are surfaces of the materials obtained by speading suspensions of pigments such as $Fe_2O_3$, $CrO_2$, $Ba(FeO_2)_2$ in polymeric matrices such as polyvinyl chloride, polyvinyl acetate, or thermosetting materials or matrices such as polyurethane or epoxy resins, spread on carriers or supports based on polyester resins, polyamide resins, or on metal carriers or supports such as Al.

Examples of surfaces (c) are surfaces of ceramic materials of the type of synthetic $Al_2O_3$ (sapphire), $CaTiO_3$, $BaTiO_3$, usually utilized in the manufacture of recording and/or reading heads on magnetic means or as supports, particularly of pins, for horology or precision mechanics.

Examples of surfaces (d) are synthetic polymers, also of the elastomeric type, such as polyamides, polyimides, polyetherketones, aromatic polyethersulphones, polysulphones, polycarbonates, polyacetals, and in general the technopolymers utilized for the manufacture of motion members in the mechanical aeronautical and horological fields, and furthermore the fluorinated, silicone, acrylic, and nitrilic (nitriacryl) rubbers. In their utilisation as lubricants for such polymers, the products of the present invention may be

admixed with the polymers in amounts of from 0.5 to 5% by weight, prior to calendering, banburizing or extrusion operations, or they may be applied onto the surface of the polymeric articles ready for use.

The compounds of formula (I) or (II) protect the surfaces coated by them from wear, when such surfaces are subjected to sliding, rolling, tangential or normal forces or stresses, or to any movement susceptible of repeating continuous or discontinuous contact by other surfaces, which may consist of the same materials as listed under (a), (b), and (c). The lubricating action of compounds (I) and (II) is exerted when they are deposited onto the abovesaid materials in continuous layers having thicknesses ranging from a few tens to a few thousands of Å ($10^{-10}$m). Such lubricating action is exerted also on surfaces of synthetic polymers, such as those listed under (d).

In particular the compounds according to the present invention, when deposited onto a surface (a), have the capability of protecting such surfaces from the action of atmospheric agents even in the presence of high humidity.

The compounds of the invention may be used also to promote the residence, on the surfaces of the materials listed under (a), (b), (c), (d), of neutral perfluoropolyether layers provided with a structure of type ($C_1$), ($C_2$), ($C_3$), as specified hereinbelow, which are well known as lubricants having considerable thermal and chemical stabilities.

($C_1$): $R_f—O—(C_3F_6)_m(CF_2O)_nR'_f$

wherein:

$R_f$ = $—CF_3$, $—C_2F_5$, or $—C_3F_7$;

$R'_f$ = an organic radical the same as or different from $R_f$;

m is an integer from 8 to 100;

n may be equal to or different from zero, wherein, if n is zero, $R_f$ is preferably $—C_3F_7$, while $R'_f$ is $—C_2F_5$ or $—C_3F_7$, while if n is different from zero, the m/n ratio is from 5 to 20, while the sum m + n is from 10 to 100;

($C_2$): $R''_f—O—(C_2F_4O)_p(CF_2O)_qR'''_f$

wherein:

$R''_f$ and $R'''_f$, which may be the same as or different from each other, may be $—CF_3$ or $—C_2F_5$, the p/q ratio is from 0.5 to 5, and the sum p + q is from 20 to 200;

($C_3$): $R''_f—O—(C_2F_4O)_r(CF_2O)_s(C_3F_6O)_vR'''_f$

wherein:

$R''_f$ and $R'''_f$, which may be the same as or different from each other, are the same as in the preceding structure, the r/s ratio is rom 0.5 to 5, the v/r + s ratio is from 0.01 to 0.4 and the sum v + r + s is from 10 to 300.

Mixtures of the compounds of formula (I) and/or (II) with the neutral oils of types ($C_1$), ($C_2$), ($C_3$) described hereinabove may include from 1% to 50% by weight, but preferably from 1% to 10% by weight, of compounds (I) and/or (II).

In such mixtures, the lubricating action is improved even for small thicknesses of the layer which are from 5—10 to a few thousands of Å ($10^{-10}$m), and in sliding or rolling conditions between two surfaces even in very rapid relative motion, up to 5—10 km/minute.

The capability of the abovesaid mixtures of forming thin layers permanently adsorbed on surfaces of type (a), (b) and (c) is determined by vertical spreading measurements performed by immersing a minor side of a rectangular lamina (15 × 100 × 1 mm) made of a meterial of type (a), (b) or (c) into pans or cups containing the lubricating mixtures and by measuring the thickness of the lubricating film which forms in the course of time at different distances from the free surface of the lubricating liquid in the pan. Such thickness can be determined by ESCA analysis, or FT—IR spectrophotometry (spectrometry) by reflection on the examined surface.

The mechanical resistance of the films consisting of the compounds according to the present invention was checked by interposing proportioned amounts of the compounds between two laminas of the metals listed under (a) and connected with an electric circuit in order to measure the resistance opposed by the film to the passage of the electric current: one of the laminas was subjected to a known load (0.5 kg) and to a reciprocating motion with a stroke of 0.5 mm at a known frequency 2—50 Hz). It may be observed that the electrical resistance, which initially was infinite, remains high after many tens of hours of reciprocating motion when between the metal laminas there are interposed compounds (I), (II) or a mixture thereof in an amount of 1—50% with an oil listed under ($C_1$), ($C_2$), ($C_3$). The lubrication of parts in continuous or reciprocating motion, carried out by means of the compounds of types (I) and (II), according to the invention, or by mixtures thereof with the perfluoropolyether oils of aforesaid type C, permits wearing phenomena of sliding, rolling, vibrating parts, or on contacts subjected to repeating opening-closing cycles, to be avoided, thus allowing uniform performance.

Among the technical fields of particular interest in the utilization as lubricants of compounds (I) and (II) according to the present invention, there may be mentioned magnetic means (tapes), electric contactors, ball or roller bearings, and bushes made of metals or sintered alloys, and in such case also the protective action of compounds (I) and (II) against atmospheric agents is very effective.

In particular in the field of magnetic tapes, the surface to be protected from wear caused by contact with a reading head is composed of a film of a magnetic pigment, dispersed in a polymeric matrix, of type (b) described above.

Lubricating films based on compounds (I) and (II) according to the present invention, or on mixtures thereof with perfluoropolyether oils of type (C), may be applied by immersion, spreading or spraying of the compounds as such or of dilute solutions thereof, for example at 0.5—5.5% of the lubricating compound or mixture, in 1,1,2-trichlorotrifluoroethane, and by subsequent evaporation of the solvent.

The same lubricant application technique may be adopted when the magnetic material is of the metallic type, i.e. it consists of thin layers of metals such as Co—Cr, Co—Ni, or Co—Ni—P, of the type (a) described above, deposited onto rigid or flexible carriers, by vacuum evaporation, sputtering or electrodeposition techniques.

The lubrication of magnetic means by the compounds of type (I) or (II) or by mixture thereof with perfluorinated oils of type (C) permits there to be overcome, in the case of metal flexible discs, endurance tests of the order of 3—10 millions of passages on the same path by a reading head which is usually based on synthetic $Al_2O_3$, $BaTiO_3$ or $CaTiO_3$.

The wear resistance of magnetic tapes was measured by subjecting the tape, either or not lubricated with the compounds of the present invention, maintained in reciprocating motion for a stroke of 6.78 cm under the tension of a force of 226.8 g applied over a tape width of 1.27 cm, to the action of a steel ball having a 8 mm diameter and loaded by a 78 g load until passage of light through the carrier surface is observed, after the magnetic layer had been removed by wear.

The compounds of type (I) or (II) and mixtures thereof with perfluorinated oils of type (C) are useful for forming thin protective layers against wear due to sliding or to contact, on electrical contactors, where the parts intended for contact for electrical current passage are composed of noble metals such as Au, Ag, Pt or of alloys containing Au and Ag.

In this case also, the lubricating film is deposited by immersion or spraying with a solution of the lubricant in 1,1,2-trichlorotrifluoroethane.

In the case of electromagnetic contactors with lamellar-type nuclei, the compounds of type (I) or (II) and mixtures thereof with compounds of type (C) efficaciously damp with vibrations of the contactor.

The compounds of the present invention are useful as lubricants of manufactured articles based on technopolymers subjected to movement and to contact with other surfaces.

Examples of such manufactured articles are gears, porous bushes, sliders, contacts, and components of ball or roller bearings.

The compounds of the present invention may also be usefully included in the formulation of greases consisting of suspending liquids of a polar nature, and of thicknesses consisting of organic polymeric materials or of inorganic materials.

The effect of the compounds of type (I) and (II) is that of enhancing the mechanical stability of greases, of reducing oil leakage during work, and of increasing anti-wear effect. Examples of greases which can be improved by the compounds of the present invention, used in amounts of from 0.1 to 2%, are greases formulated with mineral, silicone or perfluoropolyether oils and thickened with PTFE, TFE—EFP (FEP) copolymers, silica, graphite, $MoS_2$, and bentonites.

The compounds of formula (I) and (II), of the present invention, can be prepared starting from known compounds having respectively the following structures:

($D_1$): $R—O—(C_3F_6O)_m—(CFXO)_n—CFX—K$,

($D_2$): $R''CFXO—(C_3F_6O)_x—(CFXO)_y—(C_2F_4O)_z—CFX—K$,

wherein:

R, R", X, m, n, x, y, z are the same as defined hereinbefore, and R" may also be the same as K, and where K is a functional group of the type

—COOM (M = H, $CH_3$),

—CHO,

$—CH_2OH$,

—COCl,

—COF,

$—CH_2OCH_2—COOR_1$ ($R_1$ = H, or an alkyl containing from 1 to 3 carbon atoms),

by reaction with compounds of formula D—Z, where Z has the meaning previously specified and D is a functional group capable of reacting with group K to give Y.

Compounds in which Y = $—CH_2O—$ are obtained from compounds of formula $D_1$ or $D_2$ in which K = $—CH_2OH$, by condensation in an alkaline medium with ethylene epoxide or episulphides, optionally substituted, according to known condensation techniques.

Compounds in which Y = $—CH_2OCH_2$ are usually obtainable from hydroxymethyl precursors by alkaline condensation with compounds containing a chloro- or brom-methylated aromatic ring in group Z. Examples of such compounds are: 2-chloromethyl anthraquinones substituted by groups —BE; 5-chloro, or 5-bromomethyl-benzo-oxazole or -benzo-thiazole. In other cases they are obtainable from precursors containing K = $—CH_2OCH_2COOH$ by treatments with aryl derivatives containing two functionalities in ortho positions such as $—NH_2$ and OH, $—HN_2$ and —SH.

Compounds in which Y = $—CF_2—$ are obtained by reacting compounds of formula $D_1$ or $D_2$, where K = —COCl or —COF, with products DZ where D is a metal or the type Li, Mg, Cu, in conditions which are known for the obtainment of ketonic compounds of formula $D_1$—CO—Z or $D_2$—CO—Z, then effecting the conversion of group C = O to $—CF_2—$ with $HF/SF_4$ mixtures, under temperature conditions of from 120°C to

180°C and at pressures from 20 to 60 atm., with reaction times of 20-25 hours, following by means of an infrared spectrophotometer the disappearance of the absorption due to the =CO group.

For compounds in which Y = —$CF_2O$— there is used the fluoroination method with $SF_4$/HF mixtures of the corresponding esters (prepared starting from compounds of formula $D_1$ or $D_2$, where K = —COOH, —COO-alkyl or —COCl by reaction with compounds of formula ZOH) according to the modalities described hereinbefore in order to obtain the groups —$CF_2$— from ketone compounds.

The invention will be further described with reference to the following illustrative Examples.

Example 1

53 g of an alcohol having the formula

$$CF_3O(C_3F_6O)_m(CF_2O)_nCF_2CH_2OH$$

in which the ratio m/n = 5, and having a molecular weight of 1062, were added to a solution consisting of 5.6 g of potassium tert.butylate in 150 ml of tert.butyl alcohol, maintained at a temperature of 30°C. The solution was stirred for 1 hour, the 12 g of 5-chloromethyl-1,10-phenanthroline were added thereto, allowing to react for 3 hours. The mixture was then poured into 300 ml of water and extracted with 150 ml of 1,1,2-trichlorotrifluoroethane. The extracted solution was dried by evaporation, thus obtaining 55 g of produce, which, subjected to infrared and N.M.R. analysis, exhibited the following structure:

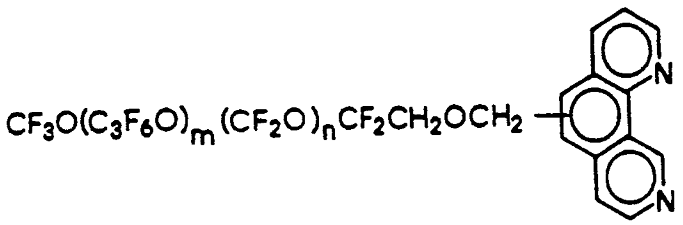

(a)

A solution of 1% by weight of such product in 1,1,2-trichlorotrifluoroethane was used to lubricate, by means of a reverse rool coater, a video tape with a $CrO_2$ pigment. The thickness of the product laid onto the tape was about 80 Å ($10^{-10}$m). The friction coefficient measured according to ASTM D 1894—73 standards on the tape so coated was 0.15; that of the tape as such was 0.32.

The tape so treated was subjected to an abrasion test by means of a Fulmer abrasion-meter, measuring the wear occurred on a thin-film sensor.

The abrasion of the treated tape was found to be 11 times less than the value of the tape as such.

The same product was utilized for lubricating a flexible disc with a magnetic Co—Cr layer obtained by sputtering; the lubricant thickness, obtained by immersion into a 1% product solution, was about 150 Å ($10^{-10}$m).

The disc was subjected to an endurance test according to ANSI standards, by subjecting it to repeated runs on the same path under normal use conditions (300 rpm, 10 g of load) and evaluating the worsening of the performance by examination of the envelope of the entire modulation path of the recorded signal.

The tests always overcame the prescribed limit of three million passages or runs, and the first deterioration could be noticed at about 5 million passages.

Example 2

220 g of esters of formula

$$C_3F_7O(C_3F_6O)_m—CF_2—COOCH_3,$$

having a M.W. of about 2200 (as determined by N.M.R. analysis), were added to a solution of 8 g of $NaBH_4$ in 300 ml of ethanol at a temperature of 15—20°C and allowed to react, obtaining, after hydrolysis of the boric ester and washing, the corresponding alcohols

$$C_3F_7O(C_3F_6O)_m—CF_2—CH_2OH$$

with a yield of 95%. Such alcohols were dissolved in 100 ml of 1,1,2-trichlorotrifluoroethane and reacted with 2.3 g of NaH at a temperature of 0°C. the resulting mixture was placed into an autoclave, added (by absorption) with 10 g of ethylene oxide and reacted at 50°C for 5 hours. The reaction mixture was then discharged into a flask and 14 g of dimethylsulphate were added in 2 hours, at 0°C.

The whole was then poured into a water/ice mixture, thus obtaining the separation of the mixture into two layers. From the lower layer, after evaporation of the solvent, about 200 g of a product of formula:

(b) $C_3F_7O(C_3F_6O)_m—CF_2—CH_2O\ (CH_2CH_2O)_2CH_3$

were obtained.

A steel specimen, onto which a 500 Å ($10^{-10}$m) layer of the product prepared according to this example had been deposited, was subjected to the wear caused by a steel ball moving with reciprocating motion, with a stroke of 0.5 mm and with a frequency of 50 Hz under a load of 0.5 kg. The surface of the specimen and that of the ball were connected to an electric circuit with contolled resistance. After 20 hours no decrease in the starting value of the electrical resistance was observed.

A test conducted in parallel by using an analogous silicone oil having a viscosity, at 20°C, equal to 200 Cst, revealed after 20 hours a decrease of 75% in the electrical resistance.

When using a solution of the product prepared according to this example, a layer of such product having a thickness of 80 Å ($10^{-10}$m) was deposited on a magnetic tape, with a pigment based on $CrO_2$.

The tape so treated was subjected to the abrasive action of a 8 mm-diameter steel ball, having a reciprocating motion of a 6.78 cm stroke, and loaded by a 78 g force. The tape, having a 1.27 cm width, was subjected to a tangential stress of 226.8 g.

After 7000 runs the tape did not let light pass through the magnetic layer subjected to wear. Conversely, the untreated tape let pass the light after 350 such runs.

A 2% solution of compound (b) in 1,1,2-trichlorotrifluoroethane was utilized to lubricate the surface of a video tape prepared by depositing (according to the high incidence deposition technique) a 0.2 μ thick layer of Co—Ni alloy onto a polyester resin film having a thickness of 12 μ.

Two tape specimens, one of which was lubricated and the other not lubricated, were subjected to friction coefficient and still frame life comparative tests.

The (dynamic) friction coefficient measured between the non-lubricated tape and a slider made of ceramic was equal to 0.55. The same determination on a tape lubricated by the derivatives in question revealed a friction coefficient of 0.2. The still frame tests indicated that the non-lubricated tape was not capable of withstanding the still frame running for longer than 10 seconds, while the lubricated tape was capable of running for 5 minutes under the same conditions without serious damage and with an absolutely acceptable drop-out rate.

## Example 3

150 g of diesters of formua

$$CH_3OOC — CH_2OCH_2CF_2O\ (C_2F_4)_m(CF_2O)_n\ CF_2CH_2OCH_2COOH_3$$

with a ratio m/n = 0.8 and having a M.E. =8378, as determined by N.M.R. analysis, were added to a solution of 10 g of KOH in 100 ml of ethanol and 50 ml of $H_2O$, and the mixture was heated at reflux under intense stirring.

After 8 hours, the diester hydrolysis was complete. The reaction mixture was diluted with 300 ml of $H_2O$ and was acidified with HCl in excess, thus causing the precipitation of the diacids corresponding to the diesters. Such diacids (140 g) were then separated by extraction with 300 ml of 1,1,2-trichlorotrifluoroethane and successive evaporation of the solvent.

50 g of such diacids were mixed, under vacuum at 120°C—140°C, with 2.8 g of 2-aminothiophenol and were kept under stirring during 3 hours, whereafter vacuum was created in the apparatus, equipped with a cold trap, and the reaction was carried on for a further 3 hours at the above said temperature. The mixture was then discharged, after having observed on a sample, by infrared analysis, the disappearance of group C = O.

The product (45 g) was washed with methanol and separted by filtration on a membrane. On infrared and N.M.R. examination, it exhibited the formula:

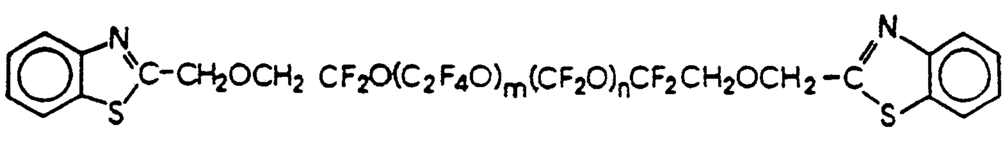

(c)

where m and n have the values defined hereinbefore.

A further amount of 50 g of the diadics prepared as described hereinabove were reacted, under the same conditions employed for preparing the above-described compound, with 2.5 g of 2-aminophenol, thus obtained 46 g of a compound of formula:

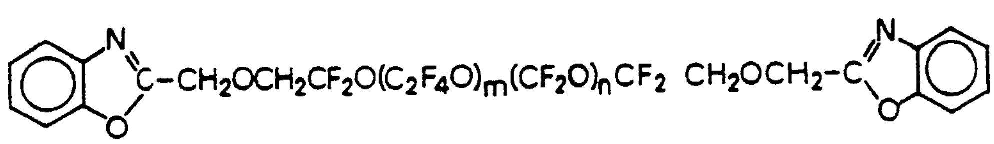

(d)

wherein m and n have the values defined hereinbefore.

1% solutions of the above-described compounds (c) and (d) in 1,1,2-trichlorotrifluoroethane were used to deposit, by immersion, a layer of such compounds, respectively, on floppy disks with pigment based on $Fe_2O_3$ with a polyurethane binder.

The obtained layer had a thickness between 200 and 500 Å ($10^{-10}$m) according to the solution extraction rate (which varies from 1 to 10 mm/sec).

The material was subjected to friction coefficient tests according to standards ASTM D 1894—73, by recording the tangential stress of a ceramic slider by means of a loading cell and a potentiometric recorder.

The results are shown in the following table:

| Compound | static F.C. | dynamic F.C. |
|---|---|---|
| (c) | 0.16 | 0.16 |
| (d) | 0.12 | 0.12 |

The friction coefficient (F.C.) of the material as such was the following:

static F.C. = 0.54
dynamic F.C. = 0.38

The friction, in the presence of functionalized lubricants, proved therefore to be reduced as absolute value and with a higher sliding regularity; furthermore, the differences between static F.C. and dynamic F.C. were much more reduced and not affected by the repeated passage of the slider.

A soft steel lamina of size 3 × 5 × 100 mm, polished and cleaned from oil residues, if any, was immersed into produce (c) and extracted at a speed of 10 mm/sec. It was allowed to rest during 12 hours, whereafter it was maintained for 28 hours in a non-saline mist at 50°C, with 100% of relative humidity.

At the end of the test the lamina did not exhibit rust traces.

By way of comparison, a lamina treated in the same manner in a fluoroether oil, type "Fomblin"®, having a viscosity of 250 Cst ($mm^2/s$) at 20°C, exhibited, at the end of the test, remarkable rusting phenomena.

## Example 4

55 g of acids of formula

$$CF_3O\,(C_3F_6O)_m\,(CF_2O)_n\,CF_2CH_2OCH_2COOH$$

with a ratio m/n = 10 and M.W. = 6504 (as from N.M.R. analysis), were reacted at 120°—150°C under a nitrogen atmosphere with 2.5 g of 2-amino-thiophenol for 3 hours at atmospheric pressure. The reaction was then carried on during 7 hours under vacuum, when, on infrared anaylsis, the disappearance of the absorption due to group C = O was observed. The product was washed with methanol and the residue was hot filtered on a membrane, thus obtaining 52 g of a compound of formula:

$CF_3O(C_3F_6O)_m\ (CF_2O)_n\ CF_2CH_2O\ CH_2-$ 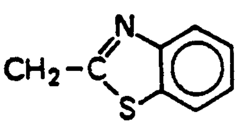 (e)

Into a solution at 2% of such component in 1,1,2-trichlorotrifluoroethane, a polyamide/aromatic imide film, type "Kapton"® (produced by DuPont) was immersed, on which, after evaporation of the solvent, the friction coefficient was measured through a ceramic slider, such coefficient being equal to 0.09. The friction coefficient of the film as such was 0.4.

A second portion of the solution at 2% of such compound, described hereinabove, was used for impregnating under vacuum a bronze porous bush which, after treatment, was applied to a pin rotating at a speed of 3000 r.p.m., causing said bush to adhere to a second bush which was free to rotate under 100 g load. After 3000 continuous runs, no traces of wear could be observed on the treated bush.

By way of comparison, a pair of brushes lubricated with mineral oil, subjected to a similar test, revealed deep wear traces after 900 hours.

When repeating the test with a polycetal bush treated with a solution of the compound of the example, no wear traces were observable after 2800 hours. Conversely, the same polyacetal bush, lubricated with silicone oil, exhibited, under the same conditions, wear traces after 1200 hours only.

## Example 5

100 g of acohols of furmula

$$CF_3O(C_3F_6O)_m\,(CF_2O)_n\,CH_2OH$$

with a ratio m/n = 20 and a M.W. = 5005, as revealed by N.M.R. analysis, were added to a solution of 2.5 g of potassium tert.-butylate in 150 ml of tert.-butyl alcohol, maintained at 30°C.

After a 2-hour stirring, 5.4 g of 9-chloromethylsim-octahydroanthracene were added.

After 4 hours at 30°C, 150 ml of 1,1,2-trichlorotrifluoroethane and 350 ml of water containing 0.4% of

hydrochloric acid were added. The lower layer was separated, and was dried from the solvent. The residual liquid was washed with methanol (2 × 100 ml), dried by means of a mechanical pump and hot filtered on a membrane. There were obtained 96 g of a limpid liquid which, on I.R. and N.M.R. analyses, was found to have the formula:

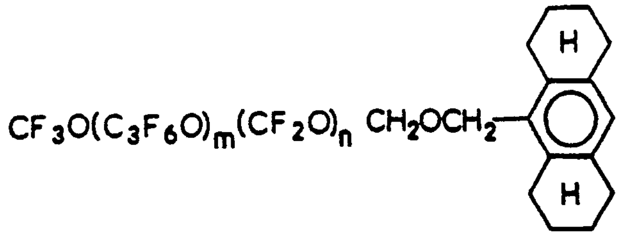

10 g of such compound were mixed in a mixer equipped with two Z-shaped arms with 3 kg of a perfluoropolyether having the structure

$$C_3F_7O\ (C_3F_6O)_m\ C_3F_7$$

having a viscosity, at 20°C, of 1500 Cst. ($mm^2/s$), and with 450 g of a polytetrafluoroethylene telomer, having a M.W. equal to 30,000.

With 0.2 g of such mixture, a ball bearing having the dimensions 24 × 40 × 8 mm was lubricated. The thus lubricated bearing was applied to a rotating element. After 3000-hours running, the bearing revealed, on optical examination, no traces of wear.

When using, as a lubricant, only perfluoropolyether, the bearing exhibited, after about 1500 hours, vibrations during rotation, while on the surface of the cage and of the balls, the beginning of wear was apparent.

## Claims

1. Fluoropolyether compounds, having the general formula

(I) $R—O—(C_3F_6O)_m—(CFXO)_n—CFX—L$, or

(II) $R''CFXO—(C_3F_6O)_x—(CFXO)_y—(C_2F_4O)_z—CFX—L$, where

$R = —CF_3, —C_2F_5$, or $—C_3F_7$;

$X = F$, or $—CF_3$;

$R'' = F, —CF_3$, or $—C_2F_5$; provided that group R″CFX contains not more than 3 carbon atoms, or L, when x is zero;

m = an integer from 3 to 100;

n = a finite integer, or zero, wherein m + n is from 3 to 100, provided that, when n in a finite integer m/n is from 5 to 20;

x = a finite integer, or zero;

y,z = finite integers, such that x+y+z is from 5 to 200, provided that, when x is a finite integer, (x+z)/y is from 5 to 0.5, while when x is zero, z/y is from 1 to 0.5 and y+z is from 5 to 200.

L = a group Y—Z, where $Y = —CH_2O—, —CH_2OCH_2—, —CE_2—$, or $—CF_2O—$; and Z has one of the general formulas:

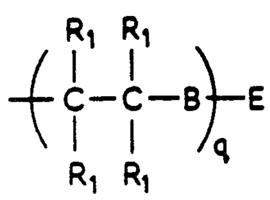

(1)

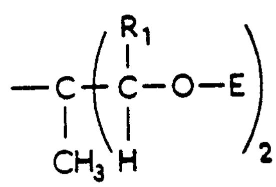

(2)

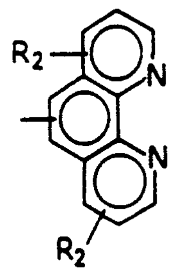

(3)

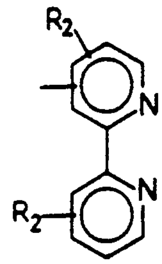

(4)

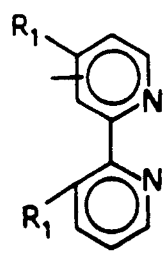

(5)

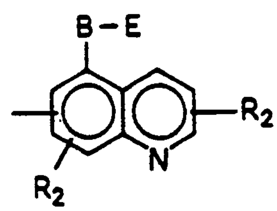

(6)

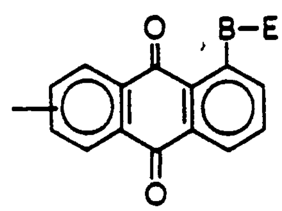

(7)

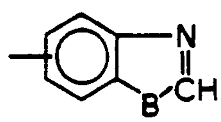

(8)

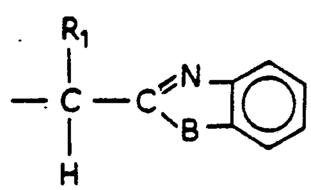

(9)

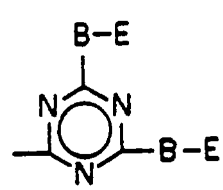

(10)

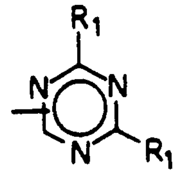

(11)

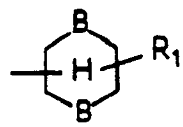

(12)

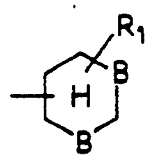

(13)

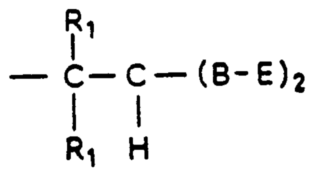

(14)

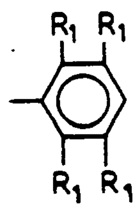

(15)

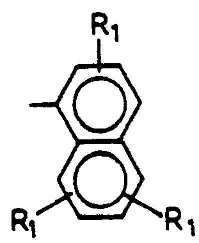

(16)

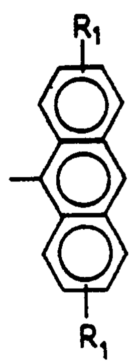

(17)

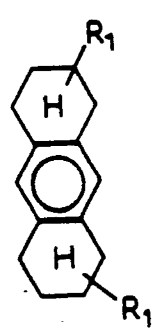

(18)

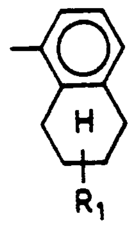

(19)

in which:

B = an atom of oxygen or of sulphur,
E = an alkyl containing from 1 to 3 carbon atoms,
$R_1$ = H or an alkyl containing 1 to 3 carbon atoms,
$R_2$ = Cl, Br, H or an alkoxy group of formula E—O—,
q = an integer from 1 to 3.

2. A compound as claimed in claim 1, wherein R is $—CF_3$ when n is a finite integer, R is $—C_2F_5$ or $—C_3F_7$ when n is zero, and X is F when x is zero.

3. A mixture characterized by including 1—50% by weight of at least one compound as claimed in claim 1 or 2, and at least one perfluoro polyether of the formulas

($C_1$): $R_f—O—(C_2F_6O)_m(CF_2O)_nR'_f$ wherein:
$R_f$ = $—CF_3$, $—C_2F_5$, or $—C_3F_7$;
$R'_f$ = an organic radical the same as or different from $R_f$;
m = is an integer from 8 to 100;
n may be equal to or different from zero, wherein, if n is zero, $R_f$ is preferably $—C_3F_7$, while $R'_f$ is $—C_2F_5$ or $—C_3F_7$,
while if n is different from zero, the m/n ratio is from 5 to 20, while the sum m + n is from 10 to 100;

($C_2$): $R''_f—O—(C_2F_4O)_p\ (CF_3O)_q\ R''\ '_f$ wherein:
$R''_f$ and $R''\ '_f$, which may be the same as or different from each other, may be $—CF_3$ or $—C_2F_5$, the p/q ratio is from 0.5 to 5, and the sum p + q is from 20 to 200;

($C_3$): $R''_f—O—(C_2F_4O)_r\ (CF_2O)_s(C_3F_6O)_vR''\ '_f$ wherein:
$R''_f$ and $R''\ '_f$, which may be the same as or different from each other, are the same as in the preceding structure, the r/s ratio is from 0.5 to 5, the v/r+s ratio is from 0.01 to 0.4 and the sum v+r+s is from 10 to 300.

4. The use of the compounds according to claim 1 or 2 as coatings of metal, ceramic, or polymeric material surfaces, or of surfaces obtained by filming or spreading of suspensions of organic and/or inorganic pigments in polymeric matrices.

5. The use of the mixtures according to claim 3 as coatings of metallic, ceramic, or polymeric material surfaces, or of surfaces obtained by filming or spreading of suspensions of organic and/or inorganic pigments in polymeric matrices.

6. Magnetic recording means, being provided with a coating consisting of or including at least one compound as claimed in claim 1 or 2.

7. Magnetic recording means, being provided with a coating consisting of or including a mixture as claimed in claim 3.

8. A process for preparing a compound according to claim 1 or 2, characterized by reacting a compound having the formula:

($D_1$) : $R—O—(C_3F_6O)_m—(CFXO)_n—CFX—K$, or
($D_2$) : $R''CFXO—(C_3F_6O)_x—(CFXO)_y—(C_2F_4O)_z—CFX—K$

wherein R, R'', X, m, n, x, y, z are as defined in claim 1, and R'' may be the same as K, and where K is a functional group of the type

—COOM (M = H, $CH_3$),
—CHO,
$—CH_2OH$,
—COCl,
—COF,
$—CH_2OCH_2—COOR_1$ ($R_1$ = H, or an alkyl radical containing from 1 to 3 carbon atoms),

with a compound of formula D—Z, where Z is as defined in claim 1 and D is a functional group capable of reacting with group K to yield Y.

**Pantentansprüche**

1. Fluoropolyether-Verbindungen der allgemeinen Formel

(I) $R—O—(C_3F_6O)_m—(CFXO)_n—CFX—L$, oder
(II) $R''CFXO—(C_3F_6O)_x—(CFXO)_y—(C_2F_4O)_z—CFX—L$, worin
R = $—CF_3$, $—C_2F_5$ oder $——C_3F_7$;
X = F oder $—CF_3$;

R'' = F, $—CF_3$ oder $—C_2F_5$, mit der Maßgabe, daß die Gruppe R''CFX nicht mehr als 3 Kohlenstoffatome oder L enthält, wenn x 0 ist;

m = eine ganze Zahl von 3 bis 100;

n = eine endliche ganze Zahl oder 0, worin m + n 3 bis 100 beträgt, mit der Maßgabe, daß m/n 5 bis 20 beträgt, wenn n eine endliche ganze Zahl ist;

x = eine endliche ganze Zahl oder 0;

y,z = endliche ganze Zahlen, so daß x + y + z 5 bis 200 beträgt, mit der Maßgabe, daß (x+z)/y 5 bis 0,5 beträgt, wenn x eine endliche ganze Zahl ist, während z/y 1 bis 0,5 und y+z 5 bis 200 betragen, wenn x 0 ist;

L = eine Gruppe X—Z, worin Y = $—CH_2O—$, $—CH_2OCH_2—$, $—CF_2—$, oder $—CF_2O—$; und Z entspricht einer der folgenden allgemeinen Formeln:

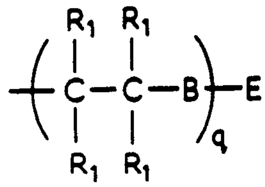
(1)

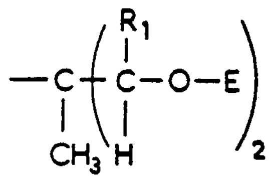
(2)

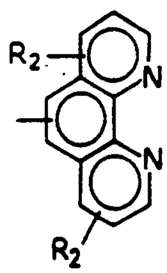
(3)

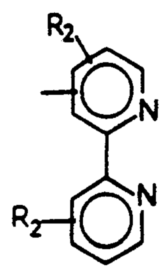
(4)

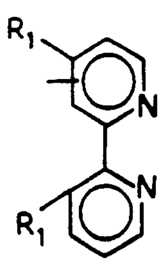
(5)

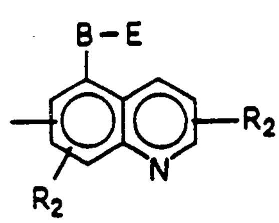
(6)

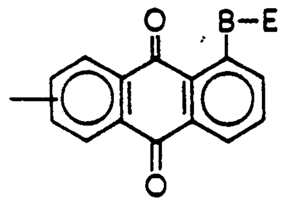

(7)

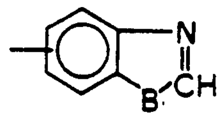

(8)

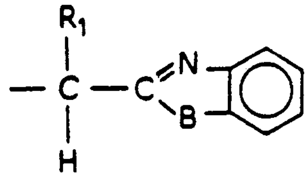

(9)

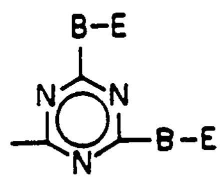

(10)

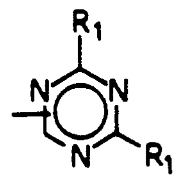

(11)

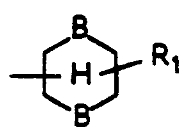

(12)

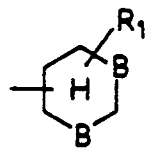

(13)

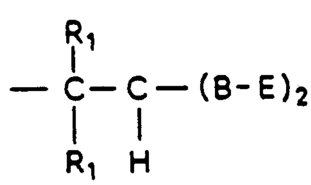

(14)

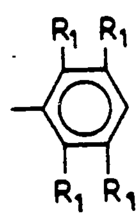

(15)

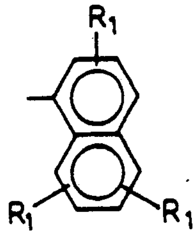

(16)

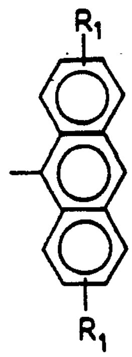

(17)

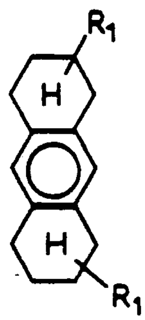

(18)

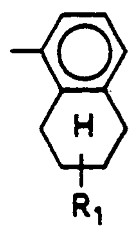

(19)

worin:

B = ein Sauerstoff- oder Schwefelatom;

E = Alkyl, enthaltend 1 bis 3 Kohlenstoffatome;

$R_1$ = H oder Alkyl, enthaltend 1 bis 3 Kohlenstoffatome;

$R_2$ = Cl, Br, H oder eine Alkoxygruppe der Formel E—O—;

q = eine ganze Zahl von 1 bis 3.

2. Verbindung nach Anspruch 1, worin R $—CF_3$ ist, wenn n eine endliche ganze Zahl ist, R $—C_2F_5$ oder $—C_3F_7$ ist, wenn n 0 ist, und X F ist, wenn x 0 ist.

3. Mischung, dadurch gekennzeichnet, daß sie 1 bis 50 Gewichtsprozent mindestens einer Verbindung nach Anspruch 1 oder 2 und mindestens einen Perfluorpolyether der folgenden Formeln enthält:

($C_1$): $R_f—O—(C_3F_6O)_m(CF_2O)_nR'_f$ worin:

$R_f$ = $—CF_3$, $—C_2F_5$ oder $—C_3F_7$;

$R'_f$ = ein organischer Rest, welcher identisch mit oder unterschiedlich von $R_f$ ist;

m ist eine ganze Zahl von 8 bis 100;

n kann gleich oder ungleich 0 sein, wobei dann, wenn n 0 ist, $R_f$ vorzugsweise $—C_3F_7$ ist, während $R'_f$ $—C_2F_5$ oder $—C_3F_7$ ist,

während dann, wenn n nicht den Wert 0 hat, das Verhältnis m/n 5 bis 20 beträgt, während die Summe m+n 10 bis 100 beträgt;

($C_2$): $R''_f—O—(C_2F_4O)_p\ (CF_2O)_qR'''_f$, worin:

$R''_f$ und $R''{}'_f$ die gleich oder voneinander verschieden sein können, $-CF_3$ oder $-C_2F_5$ sein können, das Verhältnis p/q 0,5 bis 5 liegt und die Summe p+q bis 200 beträgt;

($C_3$): $R''_f-O-(C_2F_4O)_r\ (CF_2O)_s(C_3F_6O)_vR''{}'_f$ worin:

$R''_f$ und $R''{}'_f$, die gleich oder voneinander verschieden sein könnon, die gleiche Bedeutung wie in der vorhergehenden Struktur aufweisen, das r/s Verhältnis 0,5 bis 5 beträgt, das Verhältnis v/r+s 0,01 bis 0,4 beträgt und die Summe v+r+s 10 bis 300 beträgt.

4. Verwendung der Verbindungen nach Anspruch 1 oder 2 als Beschichtungen auf Oberflächen aus Metall, Keramik oder polymerem Material oder auf Oberflächen, die durch Filmbeschichten oder Verteilen von Suspensionen von organischen und/oder anorganischen Pigmenten in polymeren Matrices erhältlich sind.

5. Verwendung der Mischungen nach Anspruch 3 als Beschichtungen auf Oberflächen aus Metall, Keramik oder polymerem Material oder auf Oberflächen, die durch Filmbeschichten oder Verteilen von Suspensionen von organischen und/oder anorganischen Pigmenten in polymeren Matrices erhältlich sind.

6. Magnetisches Aufzeichnungsmaterial, welches mit einer Beschichtung versehen ist, die mindestens eine Verbindung nach Anspruch 1 oder 2 enthält oder aus ihr besteht.

7. Magnetisches Aufzeichnungsmaterial, versehen mit einer Beschichtung, die eine Mischung nach Anspruch 3 enthält oder aus dieser besteht.

8. Verahren zur Herstellung einer Verbindung nach Anspruch 1 oder 2, dadurch genkennzeichnet, daß man eine Verbindung der Formel:

($D_1$): $R-O-(C_3F_6O)_m-(CFXO)_n-CFX-K$ oder

($D_2$): $R''CFXO-(C_3F_6O)_x-(CFXO)_y-(C_2F_4)_z-CFX-K$

worin: R, R'', X, m, n, x, y, z wie in Anspruch 1 definiert sind und R'' K entsprechen kann und wobei K eine funktionelle Gruppe des folgenden Typs sein kann

$-COOM$ (M = H, $CH_3$),

$-CHO$,

$-CH_2OH$,

$-COCl$,

$-COF$,

$-CH_2OCH_2-COOR_1$ ($R_1$ = H, oder ein Alkylrest mit 1 bis 3 Kohlenstoffatomen),

mit einer Verbindung der Formel D—Z umsetzt, worin Z wie in Anspruch 1 definiert ist und D eine funktionelle Gruppe darstellt, welche zu einer Reaktion mit der Gruppe K unter Bildung von Y befähigt ist.

**Revendications**

1. Des composés de fluoropolyéther de formule générale:

(I) $R-O-(C_3F_6O)_m-(CFXO)_n-CFX-L$ ou

(II) $R''CFXO-(C_3F_6O)_x-(CFXO)_y-(C_2F_4O)_z-CFX-L$, dans lesquelles

R = $-CF_3$, $-C_2F_5$ ou $-C_3F_7$;

X = F, ou $-CF_3$;

R'' = F, $-CF_3$, ou $-C_2F_5$, lorsque ce groupe R''CFX ne contient pas plus de 3 atomes de carbone, ou L, quand x vaut zéro;

m = un entier de 3 à 100;

n = un entier fini, ou zéro, tel que m + n soit compris entre 3 et 100, étant entendu que, lorsque n est un entier fini, m/n est compris entre 5 et 20;

x = un entier fini, ou zéro;

y, z = des entiers finis, tels que x + y + z soit compris entre 5 et 200, étant entendu que, lorsque x est un entier fini, (x + z)/(y est compris entre 5 et 0,5; alors que quand x vaut zéro, z/y est compris entre 1 et 0,5 et y + z est compris entre 5 et 200;

L = un groupe Y—Z, dans lequel Y = $-CH_2O-$, $-CH_2OCH_2$, $-CF_2-$, ou $-CF_2O-$; et Z présente une des formules générales suivantes:

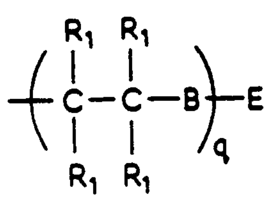

(1)

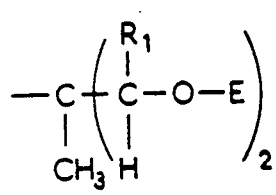

(2)

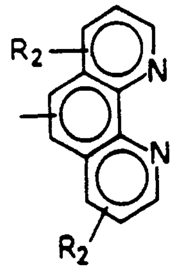

(3)

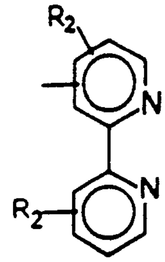

(4)

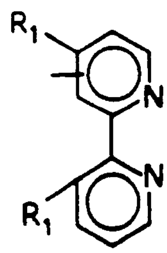

(5)

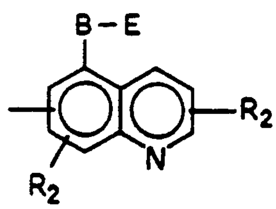

(6)

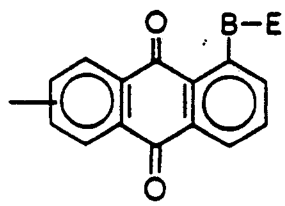

(7)

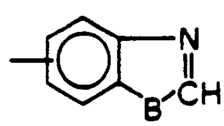

(8)

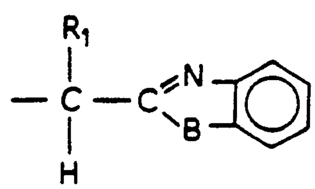

(9)

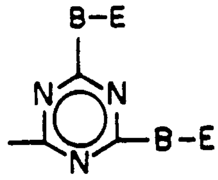

(10)

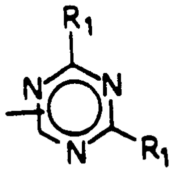

(11)

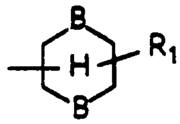

(12)

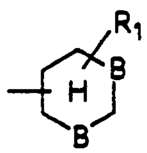

(13)

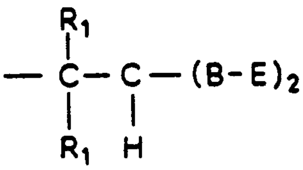

(14)

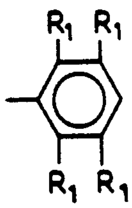

(15)

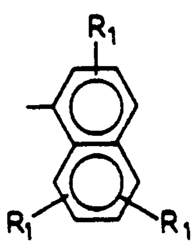

(16)

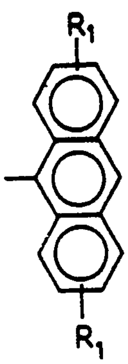

(17)

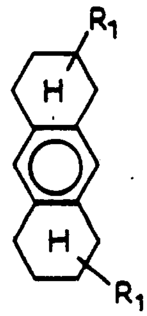

(18)

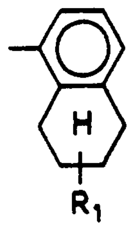

(19)

dans lesquelles:

B = un atome d'oxygène ou de soufre

E = un groupe alkyle contenant de 1 à 3 atomes de carbone

$R_1$ = H ou un groupe alkyle contenant de 1 à 3 atomes de carbone

$R_2$ = Cl, Br, H ou un groupe alkoxy de formule —E—O—,

q = un entier de 1 à 3.

2. Un composé selon la revendication 1, dans lequel R est $—CF_3$ quand n est un entier fini, R est $—C_2F_5$ ou $—C_3F_7$ quand n vaut zéro, et X est F quand x vaut zéro.

3. Un mélange caractérisé par le fait qu'il contient de 1 à 50 % en poids d'au moins un composé selon les revendications 1 ou 2, et au moins un perfluoropolyéther de formules:

($C_1$): $R_f—O—(C_3F_6O)_m(CF_2O)_nR'_f$ dans laquelle:

$R_f$ = $—CF_3$, $—C_2F_5$, ou $—C_3F_7$;

$R'_f$ = un radical organique identique ou différent de $R_f$;

m = un entier de 8 à 100;

n peut être égal ou différent de zéro tel que, si n vaut zéro, $R_f$ est de préférence $—C_3F_7$, tandis que $R'_f$ est $—C_2F_5$ ou $—C_3F_7$, alors que si n est différent de zéro, le ratio m/n est compris entre 5 et 20, tandis que la somme m + n est comprise entre 10 et 100;

($C_2$): $R''_f—O—(C_2F_4O)_p\ (CF_2O)_qR''\ '_f$; dans laquelle:

$R''_f$ et $R''\ '_f$, qui peuvent être identiques ou différents, peuvent être $—CF_3$ ou $—C_2F_5$, le ratio p/q est compris entre 0,5 et 5 et la somme p + q est comprise entre 20 et 200;

($C_3$): $R''_f—O—(C_2F_4O)_r\ (CF_2O)_s(C_3F_6)_vR''\ '_f$; dans laquelle:

$R''_f$ et $R''\ '_f$, qui peuvent être indentiques ou différents, sont les mêmes que dans la structure précédente, le ratio r/s est compris entre 0,5 et 5, le ratio v/r + s est compris entre 0,01 et 0,4 et la somme v + r + s est comprise entre 10 et 300.

4. L'utilisation des composés selon la revendication 1 ou 2, en tant que revêtements de surfaces métallique, céramique ou en matériau polymère, ou de surfaces obtenues par la formation d'un film ou l'étalement de suspensions de pigments organiques et/ou minéraux dans des matrices polymères.

5. L'utilisation de mélanges selon la revendication 3 en tant que revêtements de surfaces métallique, céramique ou en matériau polymère, ou de surfaces obtenues par la formation d'un film ou l'étalement de suspensions de pigments organiques et/ou minéraux dans des matrices polymères.

6. Des moyens d'enregistrement magnétique pourvus d'un revêtement consistant en ou contenant au moins un composé comme revendiqué dans la revendication 1 ou 2.

7. Des moyens d'enregistrement magnétique pourvus d'un revêtement consistant en ou contenant un mélange comme revendiqué dans la revendication 3.

8. Un procédé de préparation d'un composé selon la revendication 1 ou 2, caractérisé par la présence d'une réaction entre un composé de formule:

($D_1$): $R—O—(C_3F_6O)_m—(CFXO)_n—CFX—K$, ou

($D_2$): $R''CFXO—(C_3F_6O)_x—(CFXO)_y—(C_2F_4O)_z—CFX—K$

dans lesquelles R, R'', X, m, n, x, y, z ont les mêmes significations que dans la revendication 1, et R'' peut être identique à K, et où K est un groupe fonctionnel du type:

—COOM (M = H, $CH_3$),

—CHO,

$—CH_2OH$,

—COCl,

—COF,

$-CH_2OCH_2-COOR_1$ ($R_1$ = H, ou un radical alkyle contenant de 1 à 3 atomes de carbone), avec un composé de formule D—Z, dans laquelle Z est tel que défini dans la revendication 1 et D est un groupe fonctionnel capable de réagir avec le groupe K pour donner Y.